**Europäisches Patentamt**

**European Patent Office**

**Office européen des brevets**

(19)

(11) Veröffentlichungsnummer : **0 011 882**
**B1**

(12)

# EUROPÄISCHE PATENTSCHRIFT

(45) Veröffentlichungstag der Patentschrift :
07.04.82

(51) Int. Cl.³ : **B 23 Q   3/155,** B 23 Q   3/157

(21) Anmeldenummer : **79200528.2**

(22) Anmeldetag : **21.09.79**

(54) **Werkzeugmaschine mit Werkzeugwechselvorrichtung.**

(30) Priorität : **29.11.78 CH 12207/78**

(43) Veröffentlichungstag der Anmeldung :
**11.06.80 (Patentblatt 80/12)**

(45) Bekanntmachung des Hinweises auf die Patenterteilung : **07.04.82 Patentblatt 82/14**

(84) Benannte Vertragsstaaten :
**CH DE FR GB IT SE**

(56) Entgegenhaltungen :
**FR - A - 2 303 637**
**US - A - 3 458 924**

(73) Patentinhaber : **Werkzeugmaschinenfabrik Oerli-
kon-Bührle AG**
**Birchstrasse 155**
**CH-8050 Zürich (CH)**

(72) Erfinder : **Ewertowski, Norbert, Ing.grad.**
**Römerstrasse 39**
**D-6057 Dietzenbach-Steinberg (DE)**

Imprimerie Jouve, 18, rue St-Denis, 75001 Paris, France

EP 0 011 882 B1

Werkzeugmaschine mit Werkzeugwechselvorrichtung

Die Erfindung betrifft eine Werkzeugmaschine mit einer Werkzeugwechselvorrichtung, mit einem Greiferkopf und einem daran angeordneten Greifer zum Ueberführen von Werkzeugen aus einem Magazin zu einer Arbeitsspindel.

Werkzeugmaschinen dieser Art ermöglichen einen raschen, meist automatisch gesteuerten Wechsel der Werkzeuge an den Arbeitsspindeln. Die Werkzeugwechselvorrichtungen übernehmen in der Regel ein Werkzeug im Magazin, das meist in einiger Entfernung von der Arbeitsspindel angeordnet ist, führen es bis zur Arbeitsspindel und setzen es in diese ein. Ebenso entfernen sie das zuvor verwendete Werkzeug aus der Arbeitsspindel und führen es wieder dem Magazin zu.

Aus DE-OS 26 13 736 ist eine Horizontal- und Vertiaki-Bohr-Fräsmaschine mit einer Werkzeugwechselvorrichtung bekannt. Diese Maschine weist eine Arbeitsspindel auf, die in einem an sich bekannten Schwenkkopf lagert, der mittels einer automatischen Schwenk-Verriegelungseinrichtung die Arbeitsspindel in eine vertikale und eine horizontale Position schwenkt. Diese Bohr-Fräsmaschine ermöglicht zusammenhängende automatische Arbeitsabläufe einschliesslich Werkzeugwechsel für die horizontalen und vertikalen Bearbeitungen, indem der Werkzeugwechsel mittels eines konventionellen Werkzeugwechslers stets in der horizontalen Position der Arbeitsspindel erfolgt. Bei dieser Methode des automatischen Werkzeugwechsels ist im Zuge der Vertikalbearbeitung beim Ausbohren mehrerer gleichachsiger Bohrungen mit unterschiedlichen Durchmessern, infolge des mehrfachen Umschaltens des Schwenkkopfes zum Werkzeugwechsel, die Fluchtgenauigkeit der Bohrungen eingeschränkt. Ferner entsteht ein Zeitverlust, da der Schwenkkopf vor Beginn und nach Beendigung jedes Werkzeugwechselvorganges den kompletten Funktionsablauf (Ausheben aus der Hirth-Verzahnung — Schwenken — Anklemmen in die Hirth-Verzahnung) der Schwenk-Verriegelungs-einrichtung absolvieren muss. Ausserdem hat das häufige Umschalten des Schwenkkopfes negative Auswirkungen auf die bleibende Genauigkeit und Starrheit der in Präzisions-ausführung gefertigten Schwenk-Verriegelungseinrichtung.

Da die Lagegenauigkeit der Arbeitsspindel, insbesondere in der wesentlichen horizontalen Position, nicht gleich der einer ortsfest gelagerten Arbeitsspindel sein kann und aufgrund dessen, dass der Bauraum für eine kräftige Dimensionierung der Arbeitsspindel und deren Lagerung im Schwenkkopf eingeschränkt ist, sind Bohr-Fräsmaschinen zur 5-Seiten-Bearbeitung in gleicher Grössenordnung mit zwei festen Arbeitsspindeln bekannt. Diese weisen jedoch keine Werkzeugwechselvorrichtungen auf.

Aus den obligen Ausführungen geht hervor, dass man die für hohe Genauigkeit und hohe Schnittleistung prädestinierten Horizontal-Bohr-Fräsmaschinen zur 5-Seiten-Bearbeitung mit einer zusätzlichen Vertikalarbeitsspindel nur begrenzt produktiv zum Einsatz bringen kann, weil es nicht möglich ist, den automatischen Werkzeugwechsel an beiden Arbeitsspindeln durchzuführen. Beim Einsatz von Mehrzweckmaschinen mit einer in einem Schwenkkopf gelagerten Arbeitsspindel sind schwere Zerspanungen ausgeschlossen und es entstehen bei der Senkrecht-Bearbeitung im Zusammenhang mit dem Werkzeugwechsel Zeitverluste sowie eine zusätzliche Beanspruchung der präzisen Schwenk-Arretiervorrichtung.

Weiter sind Horizontal-Bohr-Fräsmaschinen mit Werkzeugwechselvorrichtungen bekannt, deren Zubringer horizontal an einer gekrümmten horizontalen Führungsschiene zwischen dem Magazin und der Horizontalarbeitsspindel fahrbar ist. Die gekrümmte Führungsschiene ist hierbei relativ zur Arbeitsspindel bzw. zum Spindelstock ortsfest und am Zubringer ist eine stets horizontal gerichtete Drehachse für einen um 180° drehbaren Greiferarm mit zwei Greiferzangen angeordnet (OS 2 264 080). Auch diese Werkzeugmaschinen sind nur geeignet, in einer Arbeitsspindelstellung Werkzeugwechselvorgänge durchzuführen.

Aus der amerikanischen Patentschrift N° 3 458 924 ist eine Werkzeugmaschine mit einer Werkzeugwechselvorrichtung bekannt, wobei die Werkzeugwechselvorrichtung einen Greiferkopf mit daran angeordneten Greifern aufweist, welcher zum Ueberführen von Werkzeugen aus einem Magazin zu einer Arbeitsspindel ausgebildet ist. Da die Werkzeuge im Magazin senkrecht stehen, die Achse der Arbeitsspindel aber senkrecht dazu angeordnet ist, weist dieser Werkzeugwechsler eine Einrichtung zum Schwenken des Greiferkopfes in zwei Arbeitsstellungen auf.

Bei dieser Werkzeugmaschine ist die Spindelachse horizontal angeordnet. Weder ist eine zweite vertikale Spindel noch ist die bestehende horizontale Spindel schwenkbar angeordnet. Die Werkzeuge können somit nur in horizontaler Richtung in die Arbeitsspindel eingeführt werden. Dies bedingt, dass ein Werkstück zweimal aufgespannt werden muss, wenn daran beispielsweise senkrecht zueinander stehende Bohrungen anzubringen sind.

Die Erfindung, wie sie in den Ansprüchen gekennzeichnet ist, löst die Aufgabe, eine Werkzeugmaschine mit einer Werkzeugwechselvorrichtung, mit an einem Greiferkopf angeordnetem Greifer zu schaffen, zum Ueberführen von Werkzeugen aus einem Magazin an eine Arbeitsspindel, die zueinander senkrecht stehende Arbeitsspindelstellungen aufweist. Dies wird erfindungsgemäss durch eine Einrichtung zum Schwenken des Greiferkopfes gelöst.

Die durch die Erfindung erreichten Vorteile sind darin zu erblicken, dass die Schnelligkeit des Werkzeugwechsels durch die erfindungsgemässe Lösung nicht beeinträchtigt wird und weiter die Werkzeugwechselvorrichtung bezüglich Kompaktheit, Führungsstatik sowie Integrationsfähigkeit in den Maschinenbereich den konventionellen Werkzeugwechselvorrichtungen ebenbürtig ist.

Die Erfindung wird anhand eines bevorzugten Ausführungsbeispieles an einer Bohr-Fräsmaschine mit einer ortsfest im Spindelstock gelagerten Horizontalarbeitsspindel und einer zusätzlich dieser vorschaltbaren Vertikalarbeitsspindel nährer erläutert.

Es zeigen :

Figur 1 eine Draufsicht der Werkzeugwechselvorrichtung an der Bohr-Fräsmaschine mit der Vertikalarbeitsspindel in Arbeitsposition ;

Figur 2 eine Seitenansicht zu Fig. 1 in Richtung des Pfeiles II in Fig. 1 ;

Figur 3 eine Draufsicht der Werkzeugwechselvorrichtung gemäss Fig. 1 und 2 mit der Vertikalarbeitsspindel in Parkstellung ;

Figur 4 eine Seitenansicht zu Fig. 3 in Richtung des Pfeiles IV in Fig. 3 ;

Figur 5 einen senkrechten Schnitt gemäss der Linie V...V in Fig. 2 ;

Figur 6 einen senkrechten Schnitt in vergrössertem Massstab gemäss der Linie VI...VI in Fig. 1 ;

Figur 7 einen senkrechten Schnitt in vergrössertem Massstab gemäss der Linie VII...VII in Fig. 3 ;

Figur 8 eine Ansicht des Zubringers in Richtung des Pfeiles VIII in Fig. 6 ;

Figur 9 einen waagrechten Schnitt gemäss der Linie IX...IX in Fig. 6.

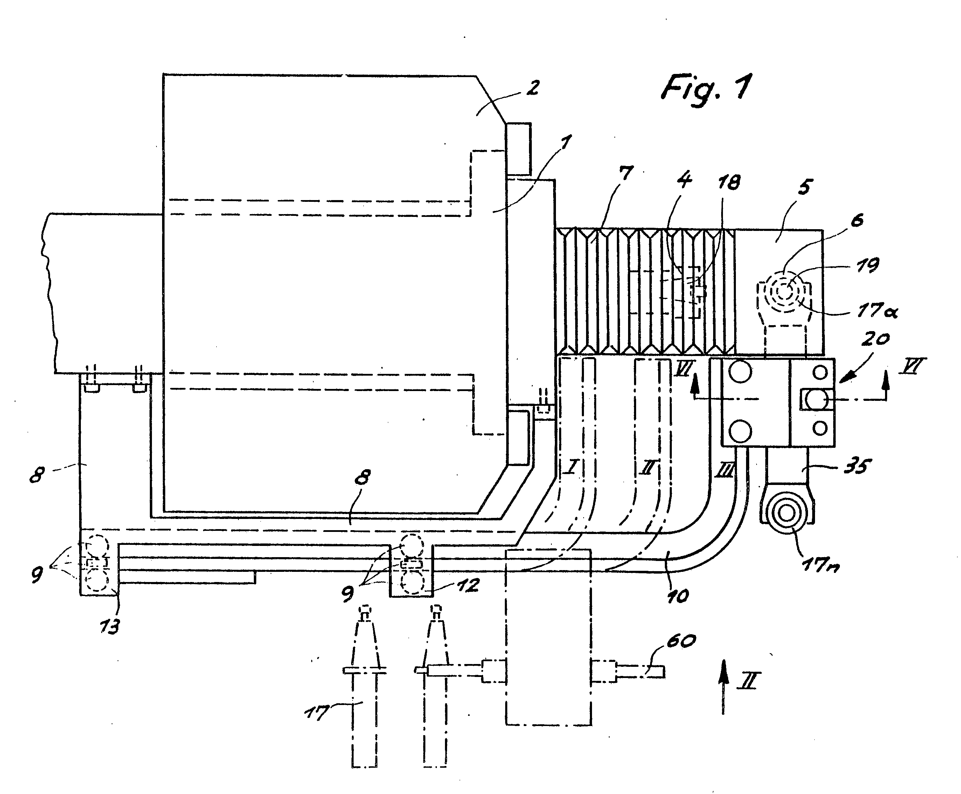

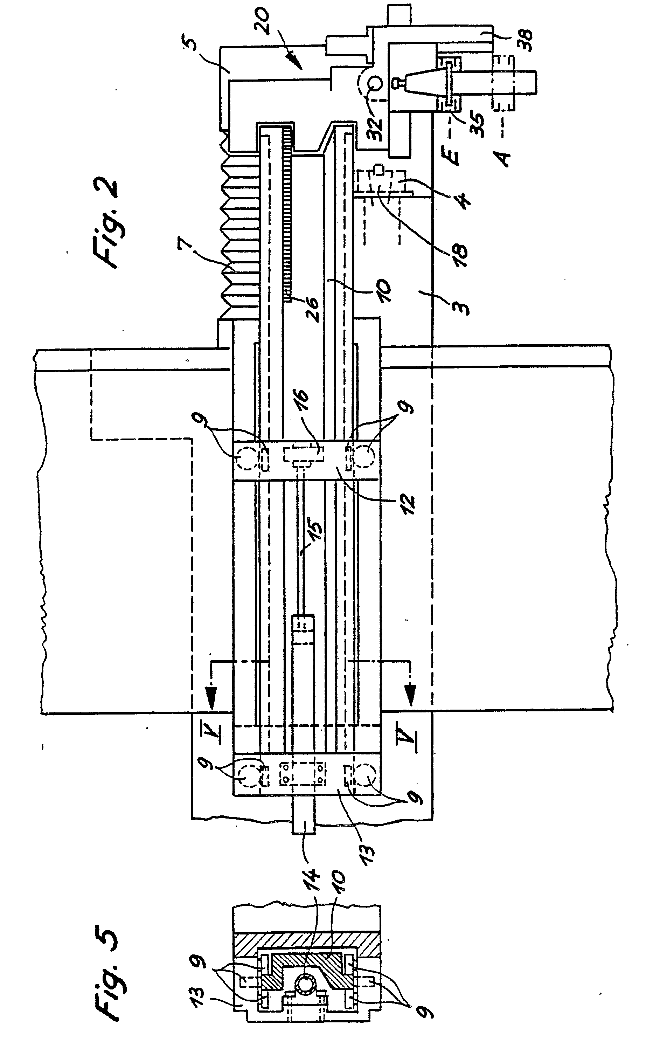

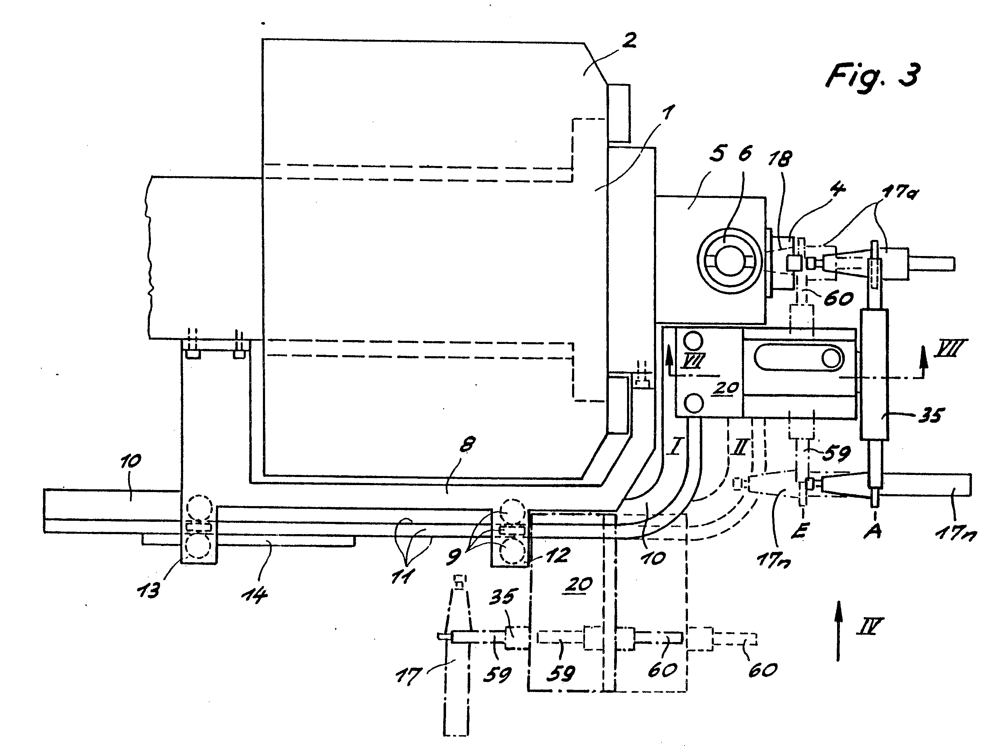

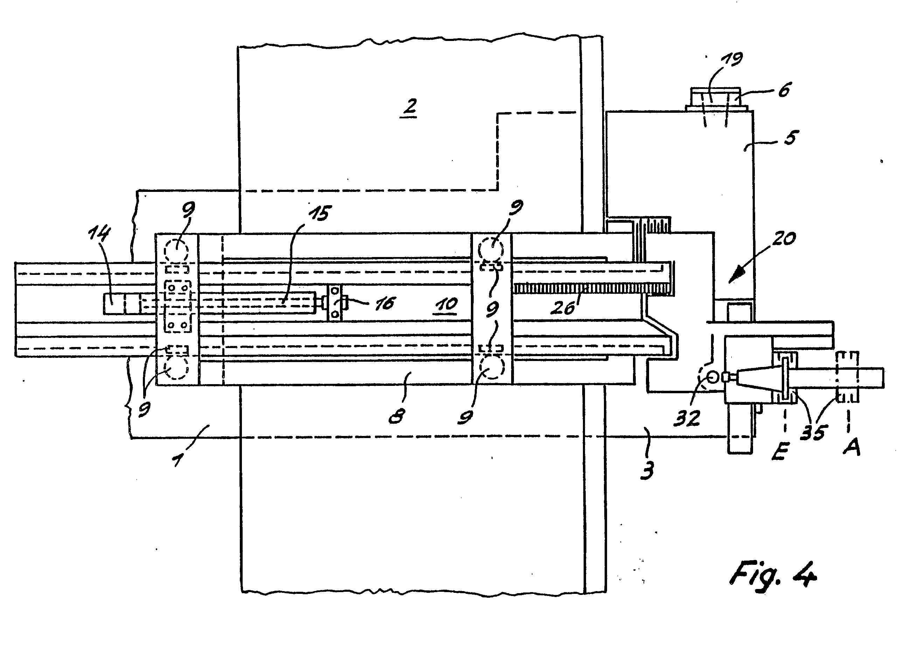

Ein Spindelstock 1 ist mittig in einem rahmenförmigen Maschinenständer 2, rechtwinklig zur Zeichenebene der Figuren 1 und 3 verschiebbar und in einem, aus der Vorderseite des Maschinenständers 2 ausragenden, Vorbau 3 lagert ortsfest eine Horizontalarbeitsspindel 4, wie auch in Figur 2 eingezeichnet. Mit 7 ist ein Faltenbalg bezeichnet, der die nicht gezeichneten Bauelemente abdeckt, mittels denen ein Vertikalarbeitskopf 5 mit einer in ihm gelagerten Vertikalarbeitsspindel 6 in eine Park- und eine Arbeitsposition stellbar ist, wie z.B. in der OS 26 46 492 angegeben. Gemäss der Figuren 1 und 2 befindet sich die Vertikalarbeitsspindel 6 in Arbeitsposition und gemäss der Figuren 3 und 4 in Parkposition.

An einer Seite des Spindelstockes 1 ist ein im wesentlichen U-förmigen Bügel 8 angeschraubt, der sämtliche Bauteile der Werkzeugwechselvorrichtung trägt und durch den diese zu einer unabhängig von der Maschine montierbaren Baueinheit wird. An Stegen 12, 13 des Bügels 8 lagern mit vertikalen und horizontalen Achsen Führungsrollen 9, zwischen denen eine gekrümmte Führungsschiene 10 an ihren horizontalen und vertikalen Bahnen 11 parallel zur Horizontalarbeitsspindel 4 verschiebbar geführt ist.

Wie aus Figur 5 ersichtlich, ist ein Schubzylinder 14 in Richtung der durch die Führungsrollen 9 gebildeten Linearführung im mittleren Bereich des U-förmigen Querschnittes der Führungsschiene 10 an der inneren Seite des hinteren Steges 13 angeschraubt. Seine Kolbenstange 15 greift mittels eines Schubstückes 16 an der Führungsschiene 10 an und kann diese in eine hintere Stellung I, eine Mittelstellung II und eine vordere Stellung III verschieben.

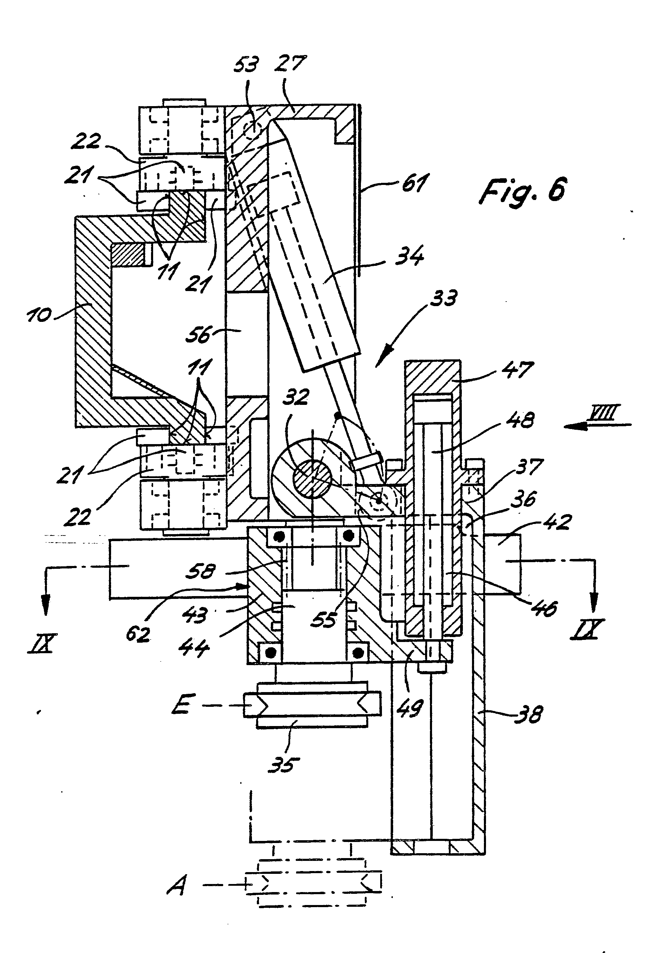

Zum Ueberführen der horizontal und rechtwinklig zur Horizontalarbeitsspindel in einem nicht näher dargestellten Kettenmagazin gehaltenen Werkzeuge 17 (Figur 1) in Werkzeugaufnahmen 18 und 19 der beiden Arbeitsspindeln 4 und 6 — sowie zum Zurückführen — dient ein Zubringen 20, der im folgenden anhand der Figuren 6, 7, 8, 9 beschrieben wird.

Der Zubringer 20 besteht im wesentlichen aus einem Gehäuse 27 sowie einer Einrichtung 33 zum Schwenken, die einen Greiferarm 35 trägt und führt sich an den gleichen verlängerten Bahnen 11 der Führungsschiene 10, an denen diese in den Führungsrollen 9 des Bügels 8 verschiebbar ist. Zur Führung des Zubringers 20 dienen Führungsrollen 21, von denen je drei an insgesamt vier Rollenhaltern 22 gelagert sind, die ihrerseits im Gehäuse 27 lagern. Die Bewegung des Zubringers 20 wird in beiden Richtungen durch entsprechende Beaufschlagung eines Hydromotors 23 erzielt, der an einer Seite des Gehäuses 27 angeordnet ist und über Kegelräder 24, Ritzelwelle 25 auf eine an der Führungsschiene 10 angeschraubte Zahnstange 26 treibt.

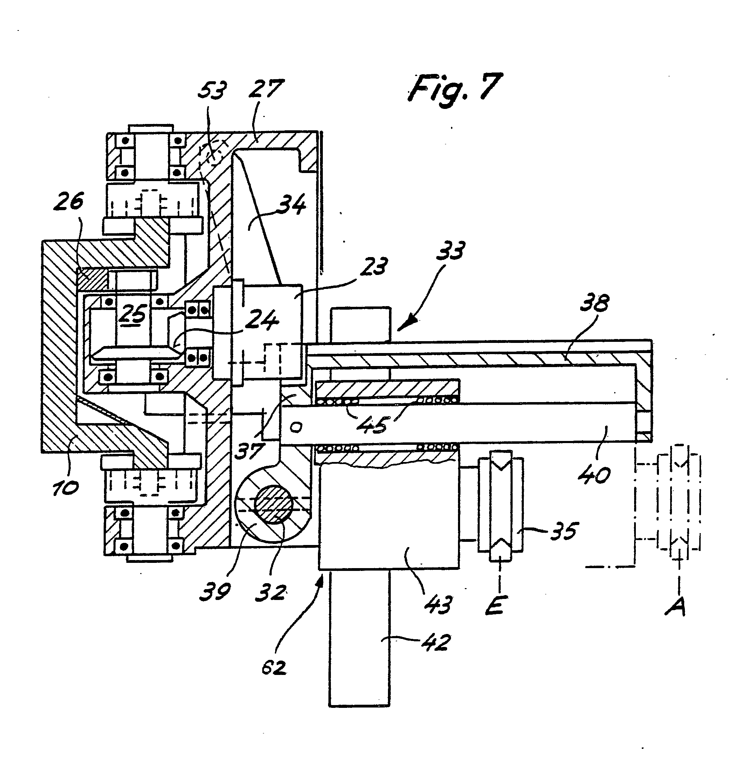

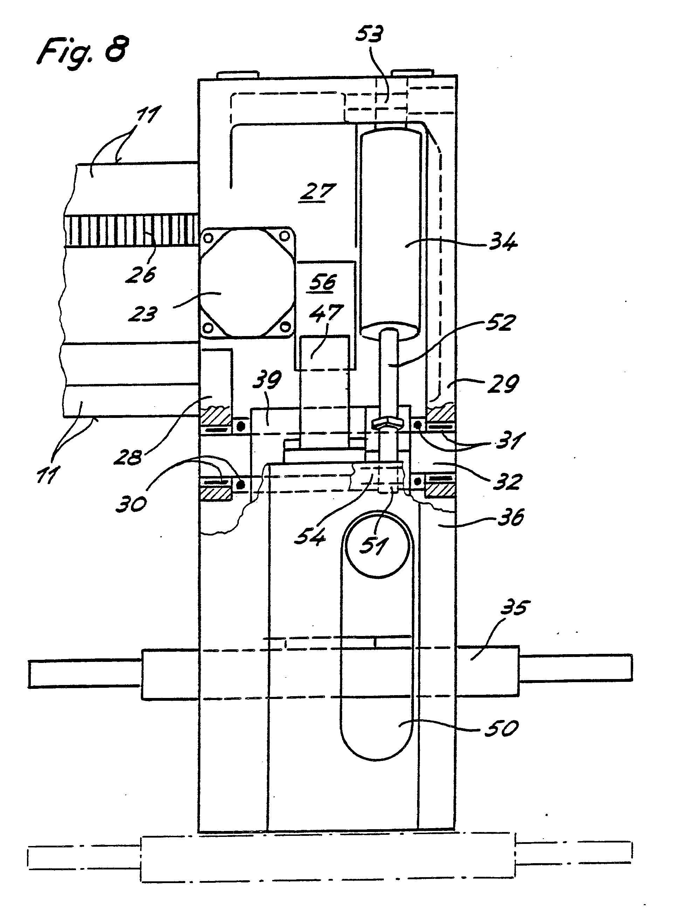

An den senkrechten Aussenseiten des Zubringergehäuses 27 des Zubringers 20 befindet sich, wie aus Figur 8 ersichtlich, unterhalb des Hydromotors 23 eine kurze Wange 28 und gegenüberliegend eine lange Wange 29. An ihnen lagert parallel - bzw. je nach Stellung des Zubringers 20 an der Führungsschiene 10 parallel und tangential — zu den Bahnen 11 in Wälzlagern 30, 31 eine Schwenkachse 32, Mittels der Schwenkachse 32 ist am Gehäuse 27 die Einrichtung 33 zum Schwenken angelenkt, die durch einen Schwenkzylinder 34 um 90° in eine in Figur 6 dargestellte untere Arbeitsstellung zum Werkzeugwechsel an der Vertikalarbeitsspindel 6 und eine aus Figur 7 ersichtliche obere Arbeitsstellung zum Werkzeugwechsel an der Horizontalarbeitsspindel 4 schwenkbar ist. In der Figur 8 wurde ein Abdeckblech 61 der besseren Uebersicht wegen nicht eingezeichnet.

Ein Grundkörper 36 der Einrichtung 33 zum Schwenken hat eine rechtwinklige Gestalt mit einem kurzen Schenkel 37 und einem langem Schenkel 38. Am Ende des kurzen Schenkels 37 befindet sich ein angearbeitetes Hülsenstück 39, in dem die Schwenkachse 32 festgesetzt ist und an den Längsseiten des langen Schenkels 38 sind Führungswellen 40, 41 angebaut. An den Führungswellen 40, 41 ist ein den Greiferarm 35 tragender Lagerkopf 43 zum Ein- und Ausführen der Werkzeuge 17 an beiden Arbeitsspindeln 4, 6 in eine Schubstellung « E » und eine Schubstellung « A » mittels Linearlager 45 verschiebbar. Hierbei ist eine Drehachse 44 des Greiferarmes 35 rechtwinklig auf die Schwenkachse 32 gerichtet. Am Lagerkopf 43 ist auch ein Drehzylinder 42 angeordnet, dessen Zahnkolben 57 mit einer Verzahnung 58 der Drehachse 44 zusammenarbeitet. Greiferarm 35, Drehzylinder 42, Lagerkopf 43 und Drehachse 44 bilden zusammen einen Greiferkopf 62.

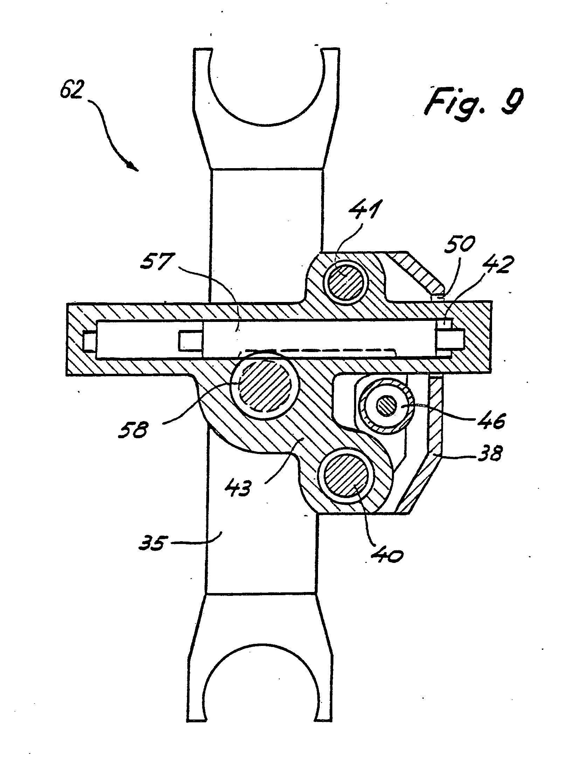

Zur Verschiebung des Lagerkopfes 43 ist im Bereich des langen Schenkels 38 ein Schubzylinder 46 mit einem ausragenden Teil 47 am kurzen Schenkel 37 angeschraubt, dessen Kolbenstange 48 an einem Ansatz 49 des Lagerkopfes 43 angreift. Der Schubzylinder 46 sowie der Drehzylinder 42 sind mit gekreuzten Achsen dicht nebeneinander zwischen den Führungswellen 40, 41 angeordnet (Fig. 9) und der Drehzylinder 42 ist in einem Durchbruch 50 des langen Schenkels 38 während der Verschiebung freigängig.

Der Schwenkzylinder 34 ist dicht neben der langen Wange 29 des Gehäuses 27 mittels eines Bolzens 53 angelenkt und ein Lagerauge 51 seiner Kolbenstange 52 lagert mittels eines Bolzens 54 in einem im kurzen Schenkel 37 eingearbeiteten Schlitz 55. In der oberen Schwenkstellung der Einrichtung 33 zum Schwenken kommt, wie aus den Figuren 7 und 8 ersichtlich, ein ausragendes Teil 47 des Schubzylinders 46 zwischen dem Hydromotor 23 und dem Schwenkzylinder 34 in einem Durchbruch 56 des Gehäuses 27 in Lage.

### Wirkungsweise

Zum Ablegen und Entnehmen von Werkzeugen 17 am Magazin ist, wie in Figur 3 ersichtlich, die Führungsschiene 10 vom Schubzylinder 14 in ihre Schubstellung I geschoben und der strichpunktiert gezeichnete Zubringer 20 steht unmittelbar neben dem Steg 12 des Bügels 8, wobei ein Greifer 59 mit quer zur Werkzeugachse wirkender Schliesskraft ein symbolisch im Magazin befindlich dargestelltes Werkzeug 17 erfasst. Die Einrichtung 33 zum Schwenken befindet sich dabei in ihrer oberen Schwenkstellung und der Greiferarm 35 steht in seiner Schubstellung « E » unterhalb des langen Schenkels 38 des Grundkörpers 36. Ein strichpunktiert gezeichneter Greifer 60 ist geöffnet.

Nachdem ein Werkzeug im Magazin abgelegt ist, wird, nach Oeffnung des Greifers 59, die Führungsschiene 10 mit dem zu ihr relativ unbeweglichen Zubringer 20 ohne Werkzeug 17 in die in Figur 3 gestrichelt gezeichnete Mittelstellung II verschoben, wodurch die nicht gezeichnete Magazinkette zur Auswahl eines « neuen » Werkzeuges 17 am Greifer 59 freigängig ist. Wenn das « neue » Werkzeug in der Uebergabestation des Magazins in Lage gekommen ist, wird die Führungsschiene 10 wieder in Stellung I geschoben und der Greifer 59 fasst das « neue » Werkzeug 17. Nach dem Schliessen des Greifers 59 wird die Führungsschiene 10 erneut in ihre Mittelstellung II geschoben und der an ihr unbeweglich gebliebene Zubringer 20 steht mit dem « neuen »

Werkzeug im Greifer 59 in Warteposition, wie in Figur 1 strichpunktiert gezeichnet.

Die Mittelstellung II der Führungsschiene 10 mit einer besonderen Frei- und Wartestellung des Zubringers 20 wird überflüssig, wenn die Greifer 59, 60 von kurzer Bauweise mit Schliesskraftwirkung in Richtung der Werkzeugachse ausgeführt werden. In diesem Fall kann bekanntlich die Magazinkette zur Auswahl eines neuen Werkzeuges 17 bei geöffnetem Greifer ohne Rückzug des Greiferarmes 35 durchlaufen. Im Ausführungsbeispiel wurde die kompliziertere Lösung dargestellt, um die universelle Anwendbarkeit der Erfindung vorzuführen.

Zum Werkzeugwechsel an der Horizontalarbeitsspindel 4 wird die Führungsschiene 10, ausgehend von der Warteposition des Zubringers 20, aus ihrer Schubstellung II in die Schubstellung I geschoben (Fig. 3) und gleichzeitig fährt der Zubringer 20 in Richtung Spindelstock 1, wobei der leere Greifer 60 in Bewegungsrichtung zeigt und das « neue » Werkzeug 17n im Greifer 59 gehalten ist. Am Ende der Fahrbewegung des Zubringers 20 fasst der Greifer 60 das « alte » in der Horizontalarbeitsspindel 4 befindliche Werkzeug 17a, wie es strichpunktiert in Figur 3 angedeutet ist. Diese Position ist in Seitenansicht in Figur 4 gezeichnet. Nachdem die Werkzeugspannung der Horizontalarbeitsspindel das « alte » Werkzeug 17a freigegeben hat, wird der Lagerkopf 43 mit dem Greiferarm 35 vom Schubzylinder 46 aus der Schubstellung « E » in die Schubstellung « A » verschoben. Infolgedessen wird das alte Werkzeug 17a aus der Horizontalarbeitsspindel 4 ausgezogen, wie es voll ausgezogen die Figur 3 zeigt. In der Schubstellung « A » ist der Greiferarm 35 vor dem langen Schenkel 38 des Grundkörpers 36 der Einrichtung 33 zur Drehung freigängig und wird mittels des Drehzylinders 42 um 180° gedreht, so dass das « neue » Werkzeug 17n vor die Horizontalarbeitsspindel 4 gelangt. Jetzt wird der Lagerkopf 43 in die Schubstellung « E » gestellt, denn der Greiferarm 35 ist wieder zu seiner Schubbewegung im Bereich des langen Schenkels 38 freigängig, wodurch das « neue » Werkzeug 17n in die Werkzeugaufnahme 18 der Horizontalarbeitsspindel 4 eingeschoben wird. Nach der Spannung des Werkzeuges 17n öffnet der Greifer 59 am eingesetzten « neuen » Werkzeug, worauf der Zubringer 20 mit dem « alten » Werkzeug 17a voran zum Magazin fährt.

Zum Werkzeugwechsel an der Vertikalarbeitsspindel 6 wird die Führungsschiene 10, ausgehend von der Warteposition des Zubringers 20, aus der in Figur 1 strichpunktiert gezeichneten Schubstellung II in die Schubstellung III geschoben und gleichzeitig fährt der Zubringer 20 an der Führungsschiene 10 in Richtung Vertikalarbeitskopf 5, wobei der leere Greifer 60 in Bewegungsrichtung zeigt und ebenfalls gleichzeitig schwenkt die Einrichtung 33 den Greiferarm 35 in die untere Arbeitsstellung, in der die Drehachse 44 des Greiferarmes 35 parallel zur Vertikalarbeitsspindel 6 gerichtet ist. Am Ende der Fahrbewegung fasst der leere Greifer 60 das « alte » in der Vertikalarbeitsspindel befindliche Werkzeug 17a. Diese Position ist in Seitenansicht in Figur 2 gezeichnet. Nachdem die Werkzeugspannung das « alte » Werkzeug 17a freigegeben hat, wird der Lagerkopf 43 mit dem Greiferarm 35 vom Schubzylinder 46 in die Stellung « A » verschoben. Infolgedessen wird das « alte » Werkzeug 17a aus der Vertikalarbeitsspindel 6 ausgezogen. In der Schubstellung « A » ist der Greiferarm 35 unterhalb des langen Schenkels 38 des Grundkörpers 36 der Einrichtung 33 zur Drehung freigängig und wird mittels des Drehzylinders 42 um 180° gedreht, so dass das « neue » Werkzeug 17n unter die Vertikalarbeitsspindel 6 gelangt. Darauf wird der Lagerkopf 43 in die Schubstellung « E » gestellt, denn der Greiferarm 35 ist wieder zu seiner Schubbewegung im Bereich des langen Schenkels 38 freigängig, wodurch das « neue » Werkzeug 17n in die Werkzeugaufnahme 19 der Vertikalarbeitsspindel 6 eingeschoben wird. Nach der Spannung des Werkzeuges 17 öffnet der Greifer 59 am eingesetzten « neuen » Werkzeug, worauf der Zubringer 20 mit dem « alten » Werkzeug 17a voran in Richtung Magazin fährt. Gleichzeitig mit dieser Fahrbewegung schwenkt die Einrichtung 33 den Greiferarm 35 zum Werkzeugaustausch am Magazin in die obere Arbeitsstellung und die Führungsschiene 10 wird in Stellung I geschoben, um die Abgabe des « alten » Werkzeuges 17a ins Magazin zu ermöglichen.

In der Beschreibung der Funktionsabläufe an der erfindungsgemässen Werkzeugwechselvorrichtung sind mehrere allgemein bekannte Teilfunktionen enthalten. Der besseren Uebersicht wegen, wurde im Text nicht im einzelnen darauf hingewiesen. Um Kompaktheit, geringe Masse sowie gute Führungsstatik als Voraussetzung für schnellen Werkzeugwechsel zu erreichen, wurde der beschriebene Funktionsablauf derart gestaltet, dass die 180° Drehung des Greiferarmes 35 nur in der Schubstellung « A » erfolgt.

**Ansprüche**

1. Werkzeugmaschine mit einer Werkzeugwechselvorrichtung mit einem Greiferkopf (62) und einem daran angeordneten Greifer (59, 60) zum Ueberführen von Werkzeugen (17) aus einem Magazin zu einer Arbeitsspindel (4, 6), dadurch gekennzeichnet, dass zwei zueinander senkrecht stehende Arbeitsspindelstellungen (4, 6) vorgesehen sind, und dass die Werkzeugwechselvorrichtung eine Einrichtung (33) zum wahlweisen Schwenken des Greiferkopfes (62) und Einführen des Werkzeuges (17) in die Arbeitsspindel in beiden Arbeitsspindelstellungen (4, 6) aufweist.

2. Werkzeugmaschine nach Anspruch 1, dadurch gekennzeichnet, dass der ersten Arbeitsstellung des Greiferkopfes (62) eine horizontale Arbeitsspindel (4) und der zweiten Arbeitsstellung eine vertikale Arbeitsspindel (6) zugeordnet ist.

3. Werkzeugmaschine nach Anspruch 1 oder 2, dadurch gekennzeichnet, dass die Einrichtung (33) an einem Zubringer (20) angeordnet ist.

4. Werkzeugmaschine nach Anspruch 3, dadurch gekennzeichnet, dass der Zubringer (20) auf einer Führungsschiene (10) fahrbar angeordnet ist, wobei die Führungsschiene (10) zwischen dem Magazin und einem, die Arbeitsspindel (4, 6) aufnehmenden Spindelstock (1) angeordnet ist.

5. Werkzeugmaschine nach Anspruch 4, dadurch gekennzeichnet, dass am Zubringer (20) ein Greiferarm (35) mit zwei Greifern (59, 60) auf einer Drehachse (44) gelagert ist, wobei der Greiferarm (35) in Richtung der Drehachse (44) verschiebbar ist und die, die Drehachse (44) tragende Einrichtung (33) um eine Schwenkachse (32) schwenkbar ist, welche rechtwinklig zur Drehachse (44) und parallel zu den Bahnen (11) der Führungsschiene (10) angeordnet ist.

6. Werkzeugmaschine nach Anspruch 4, dadurch gekennzeichnet, dass die Führungsschiene (10) relativ zum Spindelstock (1) in Richtung der horizontalen Arbeitsspindel (4) verschiebbar angeordnet ist.

7. Werkzeugmaschine nach Anspruch 6, dadurch gekennzeichnet, dass die Führungsschiene (10) Bahnen (11) aufweist, auf welchen Führungsrollen (9) eines, mit dem Spindelstock (1) verbundenen Bügels (8), und des Zubringers (20) abrollen, wobei die Führungsschiene (10) mindestens zwei Schubstellungen aufweist und an der Führungsschiene (10) die Kolbenstange (15) eines am Bügel (8) befestigten Schubzylinders (14) angelenkt ist.

8. Werkzeugmaschine nach Anspruch 1 und 5, dadurch gekennzeichnet, dass die Einrichtung (33) zum Schwenken einen Grundkörper (36) aufweist, der aus einem kurzen und einem langen Schenkel (37, 38) besteht, welche rechtwinklig zueinander stehen, und wobei am Ende des kurzen Schenkels (37) die Schwenkachse (32) lagert.

9. Werkzeugmaschine nach Anspruch 8, dadurch gekennzeichnet, dass für den Greiferarm (35) ein Lagerkopf (43) und ein Drehzylinder (42) vorgesehen und parallel zum langem Schenkel (38) des Grundkörpers (36) verschiebbar angeordnet sind.

10. Werkzeugmaschine nach Anspruch 9, dadurch gekennzeichnet, dass ein Schubzylinder (46) und der Drehzylinder (42) mit rechtwinklig gekreuzten Achsen nebeneinander zwischen zwei am Grundkörper (36) befestigten Führungswellen (40, 41) angeordnet sind, wobei der Schubzylinder (46) mit einem ausragenden Teil (47) am kurzen Schenkel (37) des Grundkörpers (36) angeschraubt ist und der Drehzylinder (42) in einem Durchbruch (50) des langen Schenkels (38) freigängig ist.

11. Werkzeugmaschine nach Anspruch 10, dadurch gekennzeichnet, dass ein Schwenkzylinder (34) in kleinem Abstand neben einer senkrechten Seite eines Gehäuses (27) des Zubringers (20) angeordnet ist und ein Durchbruch (56) in einem Boden des Gehäuses (27) vorgesehen ist, zur Aufnahme des Schubzylinders (46) in der oberen Schwenkstellung der Einrichtung (33).

12. Werkzeùgmaschine nach Anspruch 11, dadurch gekennzeichnet, dass ein Schlitz (55) im kurzen Schenkel (37) des Grundkörpers (36) vorgesehen ist zur Aufnahme eines Lagerauges (51) einer Kolbenstange (52) des Schwenkzylinders (24).

## Claims

1. Machine tool with a tool-change device having a gripper head (62) and a gripper (59, 60) located thereon for transferring tools (17) out of a magazine to a working spindle (4, 6), characterised in that two working-spindle positions (4, 6) perpendicular to one another are provided, and in that the tool-change device has a mechanism (33) for selectively swivelling the gripper head (62) and introducing the tool (17) into the working spindle in the two working-spindle positions (4, 6).

2. Machine tool according to Claim 1, characterised in that a horizontal working spindle (4) is assigned to the first working position of the gripper head (62) and a vertical working spindle (6) is assigned to the second working position.

3. Machine tool according to Claim 1 or 2, characterised in that the mechanism (33) is located on a feeder (20).

4. Machine tool according to Claim 3, characterised in that the feeder (20) is arranged movably on a guide rail (10), the guide rail (10) being located between the magazine and a headstock (1) receiving the working spindle (4, 6).

5. Machine tool according to Claim 4, characterised in that a gripper arm (35) with two grippers (59, 60) is mounted on the feeder (20) on a rotation axle (44), the gripper arm (35) is displaceable in the direction of the rotation axle (44) and the mechanism (33) supporting the rotation axle (44) can be swivelled about a swivel axis (32) which is arranged at right angles to the rotation axle (44) and parallel to the tracks (11) of the guide rail (10).

6. Machine tool according to Claim 4, characterised in that the guide rail (10) is arranged so as to be displaceable relative to the headstock (1) in the direction of the horizontal working spindle (4).

7. Machine tool according to Claim 6, characterised in that the guide rail (10) has tracks (11) on which roll guide rollers (9) of a bracket (8) connected to the headstock (1) and of the feeder (20), the guide rail (10) having at least two push positions and the piston rod (15) of a pushing cylinder (14) fastened to the bracket (8) being articulated on the guide rail (10).

8. Machine tool according to Claims 1 and 5, characterised in that the mechanism (33) for swivelling has a basic body (36) which consists of a short and a long leg (37, 38) at right angles to one another, the swivel axis (32) being supported at the end of the short leg (37).

9. Machine tool according to Claim 8, characterised in that a bearing head (43) and a rotation cylinder (42) are provided for the gripper arm (35) and are arranged so as to be displaceable parallel to the long leg (38) of the basic body (36).

10. Machine tool according to Claim 9, characterised in that a pushing cylinder (46) and the rotation cylinder (42) are arranged next to one another, with axes intersecting at right angles, between two guide shafts (40, 41) fastened to the basic body (36), the pushing cylinder (46) being screwed by means of a projecting part (47) on the short leg (37) of the basic body (36) and the rotation cylinder (42) being freely movable in a perforation (50) in the long leg (38).

11. Machine tool according to Claim 10, characterised in that a swivelling cylinder (34) is located next to and at a short distance from a vertical side of a housing (27) of the feeder (20), and a perforation (56) is provided in a bottom of the housing (27) for receiving the pushing cylinder (46) in the upper swivelling position of the mechanism (33).

12. Machine tool according to Claim 11, characterised in that a slot (55) is provided in the short leg (37) of the basic body (36) for receiving a bearing lug (51) of a piston rod (52) of the swivelling cylinder (34).

## Revendications

1. Machine-outil comportant un dispositif de changement d'outil à l'aide d'une tête de prise (62) portant un organe de prise (59, 60) pour le transfert des outils (17) du magasin vers une broche d'usinage (4, 6), machine caractérisée par deux positions de broche d'usinage (4, 6) perpendiculaires l'une à l'autre, et en ce que le dispositif de changement d'outil comporte une installation (33) pour le basculement sélectif de la tête de prise (62) et l'introduction de l'outil (17) dans la broche d'usinage dans les deux positions de la broche d'usinage (4, 6).

2. Machine-outil selon la revendication 1, caractérisée en ce que la première position d'usinage de la tête de prise (62) est associée à une broche d'usinage, horizontale (4) 15 et à la seconde position d'usinage est associée une broche d'usinage, verticale (6).

3. Machine-outil selon la revendication 1 ou 2, caractérisée en ce que l'installation (33) est prévue sur un dispositif d'alimentation (20).

4. Machine-outil selon la revendication 3, caractérisée en ce que le dispositif d'alimentation (20) est monté mobile sur un rail de guidage (10) et le rail de guidage (10) est monté entre le magasin et une poupée porte-broche (1) recevant la broche d'usinage (4, 6).

5. Machine-outil selon la revendication 4, caractérisée en ce que le dispositif d'alimentation (20) est muni d'un bras de prise (35) à deux organes de prise (59, 60) montés sur un axe de pivotement (44), le bras de prise (35) étant coulissant en direction de l'axe de rotation (44) et l'installation (33) qui porte l'axe de rotation (44) peut basculer autour d'un axe de basculement (32) qui est perpendiculaire à l'axe de rotation (44) et parallèle aux chemins (11) du rail de guidage (10).

6. Machine-outil selon la revendication 4, caractérisée en ce que le rail de guidage (10) est monté coulissant par rapport à la poupée porte-broche (1) en direction de la broche d'usinage (4) horizontale.

7. Machine-outil selon la revendication 6, caractérisée en ce que le rail de guidage (10) comporte des chemins (11) sur lesquels roulent les galets de guidage (9) d'un étrier (8) relié à la poupée porte-broche (1) et du dispositif d'alimentation (20), le rail de guidage (10) présentant au moins deux positions de translation et la tige de piston (15) d'un vérin de translation (14) fixé à l'étrier (8) agit sur le rail de guidage (10).

8. Machine-outil selon l'une quelconque des revendications 1 et 5, caractérisée en ce que l'installation (33) de basculement comporte un corps de base (36) qui se compose d'une branche courte (37) et d'une branche longue (38), ces deux branches étant perpendiculaires l'une à l'autre et une extrémité de la branche courte (37) porte l'axe de basculement (32).

9. Machine-outil selon la revendication 8, caractérisée par une tête de palier (43) et un vérin de rotation (42) pour le bras de prise (35), montés coulissants parallèlement à la branche longue (38) du corps de base (36).

10. Machine-outil selon la revendication 9, caractérisée par un vérin de translation (46) et le vérin de rotation (42) à axe croisé en équerre, juxtaposé entre deux axes de guidage (40, 41) fixés sur le corps de base (36), le vérin de translation (46) étant vissé par une partie en saillie (47) sur la branche courte (37) du corps de base (36) et le vérin de rotation (42) étant libre dans un passage (50) de la branche longue (38).

11. Machine-outil selon la revendication 10, caractérisé par un vérin de basculement (34) situé à une faible distance du côté perpendiculaire d'un boîtier (27) du dispositif d'alimentation (20) et un passage (56) réalisé dans le fond du boîtier (27) pour recevoir le vérin de translation (46) lorsque l'installation (33) est en position supérieure de basculement.

12. Machine-outil selon la revendication 11, caractérisée par une fente (55) dans la branche courte (37) du corps de base (36) pour recevoir un œillet de palier (51) d'une tige de piston (52) du vérin de basculement (24).

Fig. 1

*Fig. 5*

*Fig. 2*

13  9

14

10

13

9

9

9

V

V

9

9

15

16

12

7

26

10

5

20

3

18

4

32

E

A

35

38

0011882

Fig. 3

0 011 882

Fig. 4

0 011 882

Fig. 6

*Fig. 7*

Fig. 8

Fig. 9